Europäisches Patentamt

European Patent Office

Office européen des brevets

(11) Veröffentlichungsnummer: **0 304 031 B1**

(12) **EUROPÄISCHE PATENTSCHRIFT**

(45) Veröffentlichungstag der Patentschrift: **04.11.92**

(51) Int. Cl.⁵: **H01S 3/097**, H01S 3/0971, H01S 3/0977, H01S 3/03

(21) Anmeldenummer: **88113349.0**

(22) Anmeldetag: **17.08.88**

(54) **Gaslaser, insbesondere CO2-Laser.**

(30) Priorität: **20.08.87 DE 3727835**

(43) Veröffentlichungstag der Anmeldung:
**22.02.89 Patentblatt 89/08**

(45) Bekanntmachung des Hinweises auf die
Patenterteilung:
**04.11.92 Patentblatt 92/45**

(84) Benannte Vertragsstaaten:
**BE CH DE FR GB IT LI NL SE**

(56) Entgegenhaltungen:
**EP-A- 0 126 316**
**EP-A- 0 178 621**
**DE-A- 3 035 702**
**DE-A- 3 240 836**

(73) Patentinhaber: **SIEMENS AKTIENGESELL-
SCHAFT
Wittelsbacherplatz 2
W-8000 München 2(DE)**

(72) Erfinder: **Brumme, Gerhard, Dr., Dipl.-Phys
Am Lochfeld 25
W-8088 Eching(DE)**
Erfinder: **Zapp, Wolfgang, Dipl.-Ing.(FH)
Hans-Fallada-Strasse 12
W-8044 Unterschleissheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Gaslaser, insbesondere $CO_2$-Laser, mit einem gasdicht abgeschlossenen (sealed-off) Gehäuse, einem Resonator mit zwei auf einer gemeinsamen Achse (optische Achse) angeordneten Resonatorspiegeln, zwei sich längs der optischen Achse erstreckenden Hauptelektroden, die zwischen sich einen Entladungsraum bilden, in dem die optische Achse verläuft, und mit mindestens einer an einer offenen Seite des Entladungsraumes sich parallel zur optischen Achse erstreckenden Hilfselektrode zur Vorionisierung. Ein derartiger Gaslaser ist aus der DE-OS 33 13 811 bekannt.

Der bekannte Laser besitzt ein zylindrisches Gehäuse aus Aluminiumoxydkeramik, das an seinen beiden Stirnseiten Resonatorspiegel aufweist und in Sealed-off-Technik dicht abgeschlossen ist. Dabei ist die Anordnung der aus Chrom-Nickel-Stahl gefertigten Hauptelektroden und der aus innen metallisierten Aluminiumoxydkeramik-Profilen bestehenden Hilfselektroden so getroffen, daß sich ein in Bezug auf die optische Achse des Resonators spiegelsymmetrischer Aufbau in Röhrentechnik ergibt. Nähere konstruktive Einzelheiten, insbesondere hinsichtlich der mechanischen Fixierung der einzelnen Teile, sind bei dem bekannten Laser - wenn man von der Integration der Hilfselektroden in die Gehäusewandung bei einer Ausführung absieht - nicht angegeben. Bei derartigen Lasern ist es aber auch von Bedeutung, daß hinsichtlich des konstruktiv-mechanischen Aufbaus und der Herstellungs- und Montagemöglichkeiten gewisse Bedingungen erfüllt werden. So treten beim Bau eines "Sealed-off"-Lasers neben der Forderung nach hoher Gasdichtigkeit mit einer Leckrate von z.B. kleiner als

$$10^{-9} \frac{mbar \times 1}{sec}$$

noch zwei weitere zusammen mit der ersten Forderung schwierig in einer Lösung zu erfüllende Forderungen auf:

a) der optische Resonator muß eine sehr hohe thermische Stabilität haben, d.h. die Richtungsänderungen der Resonatorspiegelflächen durch thermische Einflüsse müssen im Bogensekundenbereich liegen und dürfen maximal einige Bogensekunden, d.h. maximal etwa fünf Bogensekunden betragen;

b) die Hauptelektroden müssen eine hohe Parallelität zueinander haben, d.h. es ist nur eine geringe Abweichung der Parallelität der elektrisch wirksamen Hauptelektrodenflächen zueinander gestattet, beispielsweise eine Abweichung von der konstruktiv festgelegten Struktur um weniger als 20 $\mu$m, wobei für die Elektroden leitendes, für deren Abstandshalter aber nichtleitendes Material zu verwenden ist.

Der Erfindung liegt daher die Aufgabe zugrunde, für einen Gaslaser der eingangs genannten Art einen konstruktiv-mechanischen Aufbau anzugeben, bei dem bei einfacher Bauweise, leichten Herstellungs- und Montagemöglichkeiten neben einer hohen Gasdichtigkeit eine hohe Temperaturstabilität des optischen Resonators und eine hohe Parallelität der Hauptelektroden gewährleistet ist.

Diese Aufgabe wird gemäß der Erfindung dadurch gelöst, daß der Resonator mit seinen beiden Spiegeln und einem Spiegelträger sowie die beiden Hauptelektroden mit ihren Abstandshaltern und die Hilfselektroden mit ihrem Träger jeweils als selbständige Baugruppe ausgebildet sind, daß jede dieser Baugruppen für sich allein und ohne weitere gegenseitige mechanische Verbindung der Baugruppen auf einer im Gehäuse befestigbaren zentralen Trägerplatte befestigt ist, und daß das Material für den Spiegelträger der Resonatorbaugruppe einen dem Material für die zentrale Trägerplatte angenäherten thermischen Ausdehnungskoeffizienten aufweist.

Eine weitere Lösung der der Erfindung zugrundeliegenden Aufgabe sieht vor, daß der Resonator mit seinen beiden Spiegeln und einem Spiegelträger sowie die beiden Hauptelektroden mit ihren Abstandshaltern und die Hilfselektroden mit ihrem Träger jeweils als selbständige Baugruppe ausgebildet sind, daß die Hilfselektroden mit ihrem Träger an der Hauptelektrodenbaugruppe befestigt sind, daß diese Hauptelektrodenbaugruppe und die Resonatorbaugruppe für sich allein und ohne weitere gegenseitige mechanische Verbindung der beiden Baugruppen auf einer im Gehäuse befestigbaren zentralen Trägerplatte befestigt sind, und daß das Material für den Spiegelträger der Resonatorbaugruppe einen dem Material für die zentrale Trägerplatte angenäherten thermischen Ausdehnungskoeffizienten aufweist. Bei dieser Lösung ist der Laseraufbau infolge der Befestigung der Hilfselektroden an der Hauptelektrodenbaugruppe besonders kompakt, d.h. noch kleiner zu realisieren.

Der Erfindung liegt die Erkenntnis zugrunde, daß ein thermisch hochstabiler Laser sowohl einen zweckmäßigen, mechanisch konstruktiven Aufbau als auch eine zumindest im Hinblick auf den Resonator und die tragende Konstruktion thermisch angepaßte Materialauswahl erfordert. Der erfindungsgemäße Laser ist demnach in Modulbauweise erstellt, so daß sich ein einfacher Aufbau mit leichten Herstellungs- und Montagemöglichkeiten ergibt. Durch die Modulbauweise wird auch ein leichtes Auswechseln der einzelnen Baugruppen ermöglicht. Der wesentliche Vorteil des modularen Aufbaus mit zentraler Trägerplatte liegt in einer weitgehenden mechanischen Entkopplung der übrigen Baugruppen zum Resonator. Mechanische Spannungen nach dem Aufbau der einzelnen Baugruppen auf der Trägerplatte treten daher weder im thermisch unbelasteten noch im thermisch beanspruchten Zustand auf. Da ferner infolge des etwa gleichen thermischen Ausdehnungskoeffizienten der zentralen Trägerplatte und des Resonators zwischen diesem und der Trägerplatte keine thermisch bedingten Bewegungen auftreten, ergibt sich ein thermisch hochstabiler Aufbau, bei dem die geforderte hohe Genauigkeit hinsichtlich der Richtungsänderungen der Resonatorspiegelflächen und der Parallelität der Hauptelektroden sicher eingehalten werden kann.

Zweckmäßigerweise haben die Materialien für die Einzelteile der Hauptelektrodenbaugruppe und der Hilfselektrodenbaugruppen einen angenäherten thermischen Ausdehnungskoeffizienten. Dies ist insbesondere dann von Vorteil, wenn die Hilfselektroden - wie bei der zweiten Lösung vorgesehen - an der Hauptelektrodenbaugruppe befestigt sind.

Im Hinblick auf die thermischen Eigenschaften des Laseraufbaus ist es vorteilhaft, wenn die zentrale Trägerplatte aus Invar oder aus der unter dem Namen "Vacon 70"® bekannten Metallegierung besteht. Für den Fall, daß die Trägerplatte aus Invar besteht, hat sie einen besonders niedrigen thermischen Ausdehnungskoeffizienten von $\alpha \simeq 1{,}6 \times 10^{-6}$/Grad. Für "Vacon 70"® ist der Ausdehnungskoeffizient $\alpha \simeq 8 \times 10^{-6}$/Grad.

Außerdem ist es im Hinblick auf die thermischen Eigenschaften des Resonators und die thermische Entkopplung von Resonator und Trägerplatte von Vorteil, wenn der Spiegelträger der Resonatorbaugruppe aus Glaskeramik oder Keramik besteht. In diesem Fall hat der Spiegelträger der Resonatorbaugruppe einen besonders niedrigen thermischen Ausdehnungskoeffizienten von $\alpha \simeq 0{,}01 \times 10^{-6}$/Grad für Glaskeramik bzw. von $\alpha \simeq 8 \times 10^{-6}$/Grad für Keramik. Damit läßt sich in beiden Fällen die geforderte hohe Stabilität des Resonators realisieren, wobei sich bei Verwendung von Glaskeramik eine besonders hohe Stabilität erreichen läßt und die Richtungsänderungen der Resonatorspiegelflächen maximal etwa zwei Bogensekunden betragen. Bei Verwendung von Keramik liegt die Resonatorstabilität immer noch in dem geforderten Bereich bei maximal etwa fünf Bogensekunden.

Im Hinblick auf eine gute thermische Anpassung sind die bevorzugten Materialpaarungen für die zentrale Trägerplatte und den Spiegelträger der Resonatorbaugruppe demnach entweder Invar und Glaskeramik oder "Vacon 70"® und Keramik.

Schließlich ist es hinsichtlich der thermischen Eigenschaften des Laseraufbaus noch von Vorteil, wenn die Hauptelektroden aus Metall, z.B. aus Titan, Chrom-Nickel-Stahl oder Aluminium und ihre Abstandshalter aus nicht leitendem Material, z.B. aus Keramik, bestehen. Damit haben auch die Einzelteile der Hauptelektrodenbaugruppe einen angenäherten oder etwa gleichen thermischen Ausdehnungskoeffizienten. Vorzugsweise ist die Materialpaarung für die Hauptelektrodenbaugruppe Titan ($\alpha \simeq 8 \times 10^{-6}$/Grad) oder Chrom-Nickel-Stahl ($\alpha \simeq 16 \times 10^{-6}$/Grad) und Keramik ($\alpha \simeq 8 \times 10^{-6}$/Grad).

Mit diesen die Materialauswahl betreffenden Maßnahmen wird in vorteilhafter Weise erreicht, daß jede Baugruppe für ihre spezifische Aufgabe die optimalen physikalischen Eigenschaften aufweist.

Um thermisch bedingte Spannungen auch zwischen der zentralen Trägerplatte und dem Gehäuse weitgehend auszuschließen, ist es zweckmäßig, wenn das Material für das Gehäuse einen dem Material für die zentrale Trägerplatte angenäherten thermischen Ausdehnungskoeffizienten hat. Es ist jedoch auch möglich, hinsichtlich des thermischen Verhaltens unterschiedliche Materialien für die Trägerplatte und das Gehäuse zu verwenden und thermisch bedingte Spannungen dann durch ein mechanischthermisches Ausgleichselement, z.B. in Form eines Faltenbalges zwischen Trägerplatte und Gehäuse auszuschalten.

Weitere vorteilhafte Ausgestaltungen der Erfindung sind in den übrigen Unteransprüchen angegeben.

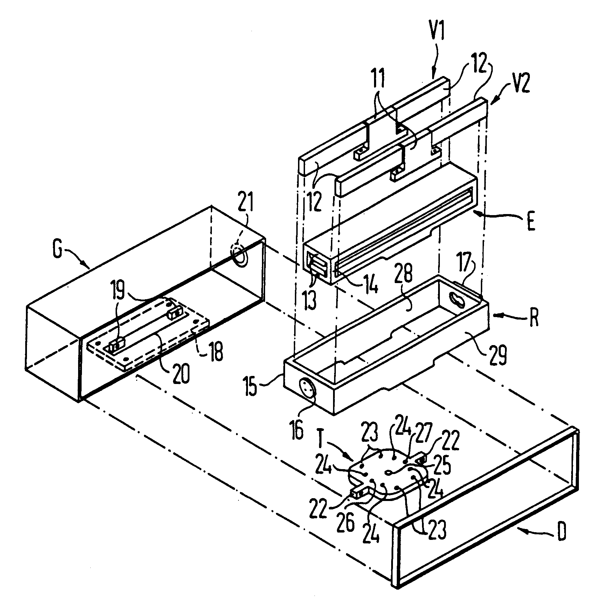

Die Erfindung ist im folgenden anhand eines in der Zeichnung dargestellten Ausführungsbeispiels näher beschrieben.

Die einzige Figur zeigt den Aufbau und die einzelnen Baugruppen eines erfindungsgemäßen Lasers in perspektivischer, explosionsartig auseinandergezogener Darstellung.

Bei dem gezeigten Laser handelt es sich um einen $CO_2$-Laser, der in einem gasdicht in "Sealed-off"-Technik abgeschlossenen Gehäuse G untergebracht ist. Das Gehäuse G besteht hier aus einem an einer Seite offenen, mit einem aufschweißbaren Deckel D dicht verschließbaren, an einer Stirnseite mit einem gasdichten optischen Fenster 21 versehenen und nicht näher dargestellte dichte Gasanschlüsse aufweisenden Kasten, der eine den modularen Laseraufbau tragende zentrale Trägerplatte T aufnimmt. Diese Trägerplatte besteht aus einem Material mit einem sehr niedrigen thermischen Ausdehnungskoeffizienten, z.B. aus der unter dem Handelsnamen "Vacodil 36"® bekanntgewordenen Invar-Metallegierung ($\alpha \simeq 1{,}6 \times 10^{-6}$/Grad) oder aus der unter dem Namen "Vacon 70"® bekannten Metallegierung ($\alpha \simeq 8 \times 10^{-6}$/Grad). Das die zentrale Trägerplatte T über eine von außen dicht aufgebrachte untere Platte 18 aufnehmende Gehäuse G besteht vorzugsweise aus einem Material mit einem dem Material für die zentrale Trägerplatte T angenäherten thermischen Ausdehnungskoeffizienten, also z.B. ebenfalls aus Invar. Das Gehäuse G kann jedoch auch aus einem anderen Material, z.B. aus Chrom-Nickel-Stahl ($\alpha \simeq 16 \times 10^{-6}$/Grad) bestehen. In diesem Fall ist zwischen dem Gehäuseboden und der zentralen Trägerplatte ein hier nicht näher dargestelltes mechanisch-thermisches Ausgleichselement in Form eines Faltenbalges oder eines mehrschichtigen Zwischenstückes vorgesehen. Zur Befestigung der Trägerplatte T ist die z.B. aus Keramik ($\alpha \simeq 8 \times 10^{-6}$/Grad) bestehende untere Platte 18 mit zwei Haltestegen 19 versehen, die durch einen Ausschnitt 20 im Gehäuseboden ragen, während die Trägerplatte T in entsprechender Weise zwei Seitenstege 22 aufweist.

Der Laseraufbau besteht nun aus modular aufgebauten, selbständigen Baugruppen, die für sich allein und ohne weitere gegenseitige mechanische Verbindung auf der zentralen Trägerplatte T befestigt sind. Diese Baugruppen sind die Resonatorbaugruppe R, eine Hauptelektrodenbaugruppe E und zwei Hilfselektrodenbaugruppen V1 und V2. Die Resonatorbaugruppe R hat zwei auf einer gemeinsamen Achse (optische Achse) an den gegenüberliegenden Stirnseiten eines Spiegelträgers 15 angeordnete Resonatorspiegel 16 und 17, von denen z.B. der Spiegel 16 parallel justierbar zu dem fest angeordneten, dem optischen Fenster 21 gegenüberliegenden Auskoppelspiegel 17 ist. Der Spiegelträger 15 besteht aus einem Material mit einem dem Material der Trägerplatte T angenäherten thermischen Ausdehnungskoeffizienten, z.B. aus Keramik ($\alpha \simeq 8 \times 10^{-6}$/Grad) oder vorzugsweise aus der unter dem Handelsnamen "Zerodur"® bekanntgewordenen Glaskeramik ($\alpha \simeq 0,01 \times 10^{-6}$/Grad), so daß zwischen der Resonatorbaugruppe R und der Trägerplatte T praktisch keine thermisch bedingten Bewegungen auftreten. Der hier aus einem offenen rechteckigen Rahmen bestehende Spiegelträger 15 der Resonatorbaugruppe R ist mit seinen Längsseitenwänden 28,29 in den Randbereichen der zentralen Trägerplatte T befestigt, z.B. angeschraubt, wozu die rechteckig oder etwa kreisrund ausgebildete Trägerplatte Bohrungen 23 aufweist.

Die Hauptelektrodenbaugruppe E ist hier über eine zentrale Bohrung 25 und seitlich davon angeordnete Löcher 26,27 für der Verdrehungssicherung dienende, nicht dargestellte Steckzapfen zwischen den Längsseitenwänden 28,29 des Spiegelträgers 15 an der zentralen Trägerplatte T befestigt, z.B. ebenfalls angeschraubt, und besteht aus zwei sich längs der optischen Achse erstreckenden Hauptelektroden 13, die zwischen sich einen Entladungsraum bilden, in dem die optische Achse verläuft, sowie aus Abstandshaltern, die hier von einem Rahmen 14 aus nichtleitendem Material, z.B. aus Keramik, ($\alpha \simeq 8 \times 10^{-6}$/Grad) gebildet sind. Die Hauptelektroden 13 selbst bestehen aus Metall, z.B. aus Chrom-Nickel-Stahl oder dem mit seinem thermischen Ausdehnungskoeffizienten dem Ausdehnungskoeffizienten der Keramik angepaßten Titan ($\alpha \simeq 8 \times 10^{-6}$/Grad). Damit besitzen die Materialien für die Einzelteile der Hauptelektrodenbaugruppe E einen angenäherten oder etwa gleichen thermischen Ausdehnungskoeffizienten.

Die Hilfselektrodenbaugruppen V1 und V2 sind zwischen den Längsseitenwänden 28,29 des Spiegelträgers 15 und der Hauptelektrodenbaugruppe E zu beiden offenen Seiten des Entladungsraumes angeordnet und weisen an einem Träger 11 gehaltene Hilfselektroden 12 zur Vorionisierung auf, die aus metallisierten Aluminiumoxydkeramikteilen bestehen, während der Träger 11 aus Keramik besteht. Damit haben auch die Materialien für die Einzelteile der Hilfselektrodenbaugruppen V1 und V2 einen angenäherten oder sogar etwa gleichen thermischen Ausdehnungskoeffizienten. Die Hilfselektrodenbaugruppen V1 und V2 sind hier für sich allein und ohne mechanische Verbindung zu der Hauptelektrodenbaugruppe E oder der Resonatorbaugruppe R über Bohrungen 24 an der zentralen Trägerplatte T befestigt, können aber auch zur Erzielung eines besonders kompakten Aufbaus an der Hauptelektrodenbaugruppe E, z.B. an der der zentralen Trägerplatte T zugewandten unteren Hauptelektrode 13 gehalten werden.

Auf diese Weise sind die selbständigen Baugruppen des Lasers modular auf einer zentralen Trägerplatte aufgebaut und damit mechanisch und thermisch voneinander und zum Resonator entkoppelt, wobei zur Vermeidung thermisch bedingter Bewegungen zwischen Trägerplatte T und Resonatorbaugruppe R diese beiden Baugruppen aus einem Material mit angenähertem oder etwa gleichem thermischen Ausdehnungskoeffizienten bestehen und die oben beim Ausführungsbeispiel näher angegebenen Materialpaarungen hinsichtlich der Optimierung der thermischen Eigenschaften des gesamten Laseraufbaus besonders vorteilhaft sind.

**Patentansprüche**

1. Gaslaser, insbesondere $CO_2$-Laser, mit einem gasdicht abgeschlossenen (sealed-off) Gehäuse (G), einem Resonator (R) mit zwei auf einer gemeinsamen Achse (optische Achse) angeordneten Resonatorspiegeln (16,17), zwei sich längs der optischen Achse erstreckenden Hauptelektroden (13), die zwischen sich einen Entladungsraum bilden, in dem die optische Achse verläuft, und mit mindestens einer an einer offenen Seite des Entladungsraumes sich parallel zur optischen Achse erstreckenden Hilfselektrode (12) zur Vorionisierung,

**dadurch gekennzeichnet**, daß der Resonator (R) mit seinen beiden Spiegeln (16,17) und einem Spiegelträger (15) sowie die beiden Hauptelektroden (13) mit ihren Abstandshaltern (14) und die Hilfselektroden (12) mit ihrem Träger (11) jeweils als selbständige Baugruppe (R,E,V1, V2) ausgebildet sind, daß jede dieser Baugruppen für sich allein und ohne weitere gegenseitige mechanische Verbindung der Baugruppen auf einer im Gehäuse (G) befestigbaren zentralen Trägerplatte (T) befestigt sind, und daß das Material für den Spiegelträger (15) der Resonatorbaugruppe (R) einen dem Material für die zentrale Trägerplatte (T) angenäherten thermischen Ausdehnungskoeffizienten ($\alpha$) aufweist.

2. Gaslaser, insbesondere $CO_2$-Laser, mit einem gasdicht abgeschlossenen (sealed-off) Gehäuse (G), einem Resonator (R) mit zwei auf einer gemeinsamen Achse (optische Achse) angeordneten Resonatorspiegeln (16,17), zwei sich längs der optischen Achse erstreckenden Hauptelektroden (13), die zwischen sich einen Entladungsraum bilden, in dem die optische Achse verläuft, und mit mindestens einer jeweils an einer offenen Seite des Entladungsraumes sich parallel zur optischen Achse erstreckenden Hilfselektrode zur Vorionisierung, **dadurch gekennzeichnet**, daß der Resonator (R) mit seinen beiden Spiegeln (16,17) und einem Spiegelträger (15) sowie die beiden Hauptelektroden (13) mit ihren Abstandshaltern (14) und die Hilfselektroden (12) mit ihrem Träger (11) jeweils als selbständige Baugruppe ausgebildet sind, daß die Hilfselektroden mit ihrem Träger an der Hauptelektrodenbaugruppe (E) befestigt sind, daß diese Hauptelektrodenbaugruppe (E) und die Resonatorbaugruppe (R) für sich allein und ohne weitere gegenseitige mechanische Verbindung der beiden Baugruppen auf einer im Gehäuse (G) befestigbaren zentralen Trägerplatte (T) befestigt sind, und daß das Material für den Spiegelträger (15) der Resonatorbaugruppe (R) einen dem Material für die zentrale Trägerplatte (T) angenäherten thermischen Ausdehnungskoeffizienten ($\alpha$) aufweist.

3. Gaslaser nach Anspruch 1 oder 2, **dadurch gekennzeichnet**, daß die zentrale Trägerplatte (T) aus Invar oder aus der unter dem Namen "Vacon 70"® bekannten Metallegierung besteht.

4. Gaslaser nach einem der Ansprüche 1 bis 3, **dadurch gekennzeichnet**, daß der Spiegelträger (15) der Resonatorbaugruppe (R) aus Glaskeramik oder Keramik besteht.

5. Gaslaser nach einem der vorhergehenden Ansprüche, **dadurch gekennzeichnet**, daß der Spiegelträger (15) der Resonatorbaugruppe (R) aus einem rechteckigen offenen Rahmen besteht, der mit seinen Längsseitenwänden (28,29) in den Randbereichen der zentralen Trägerplatte (T) befestigt ist.

6. Gaslaser nach einem der vorhergehenden Ansprüche, **dadurch gekennzeichnet**, daß die Hauptelektroden (13) aus Metall, z.B. aus Titan, Chrom-Nickel-Stahl oder Aluminium und ihre Abstandshalter (14) aus nicht leitendem Material, z.B. aus Keramik, bestehen.

7. Gaslaser nach einem der vorhergehenden Ansprüche, **dadurch gekennzeichnet**, daß die Hauptelektrodenbaugruppe (E) etwa in der Mitte der zentralen Trägerplatte (T) verdrehsicher befestigt ist.

8. Gaslaser nach einem der Ansprüche 5 bis 7, **dadurch gekennzeichnet**, daß die Hauptelektrodenbaugruppe (E) und die Hilfselektrodenbaugruppen (V1,V2) zwischen den Längsseitenwänden (28,29) des Spiegelträgers (15) angeordnet sind.

9. Gaslaser nach einem der vorhergehenden Ansprüche, **dadurch gekennzeichnet**, daß die Hilfselektroden (12) aus metallisierten Aluminiumoxydkeramikteilen bestehen und der Träger (11) der Hilfselektroden (12) aus Keramik besteht.

10. Gaslaser nach einem der vorhergehenden Ansprüche, **dadurch gekennzeichnet**, daß die Materialien für die Einzelteile der Hauptelektrodenbaugruppe (E) und der Hilfselektrodenbaugruppen (V1,V2) einen angenäherten thermischen Ausdehnungskoeffizienten ($\alpha$) haben.

11. Gaslaser nach einem der vorhergehenden Ansprüche, **dadurch gekennzeichnet**, daß das Gehäuse (G) aus einem an einer Seite offenen, mit einem Deckel (D) verschließbaren und an einer Stirnseite mit einem optischen Fenster (21) versehenen Kasten besteht.

12. Gaslaser nach einem der vorhergehenden Ansprüche,

**dadurch gekennzeichnet**, daß das Material für das Gehäuse (G) einen dem Material für die zentrale Trägerplatte (T) angenäherten thermischen Ausdehnungskoeffizienten (α) hat.

13. Gaslaser nach einem der Ansprüche 1 bis 11, **dadurch gekennzeichnet**, daß die Materialien für das Gehäuse (G) und die zentrale Trägerplatte (T) einen unterschiedlichen thermischen Ausdehnungskoeffizienten (α) haben und zwischen dem Gehäuse (G) und der zentralen Trägerplatte (T) ein mechanisch-thermisches Ausgleichselement vorgesehen ist.

14. Gaslaser nach Anspruch 13, **dadurch gekennzeichnet**, daß das mechanisch-thermische Ausgleichselement aus einem Faltenbalg besteht.

15. Gaslaser nach Anspruch 13, **dadurch gekennzeichnet**, daß als mechanisch-thermisches Ausgleichselement ein Zwischenstück in Sandwich-Bauweise vorgesehen ist, dessen Schichten einen unterschiedlichen thermischen Ausdehnungskoeffizienten (α) aufweisen, der dem thermischen Ausdehnungskoeffizienten (α) des Gehäusematerials bzw. dem des Materials für die zentrale Trägerplatte (T) angenähert ist.

16. Gaslaser nach einem der Ansprüche 13 bis 15, **dadurch gekennzeichnet**, daß das Gehäuse (G) aus Chrom-Nickel-Stahl besteht.

**Claims**

1. Gas laser, especially a $CO_2$ laser, having a gas-tight sealed-off housing (G), a resonator (R) with two resonator mirrors (16, 17) arranged on a common axis (optical axis), two main electrodes (13) extending along the optical axis, which form between them a discharge space in which the optical axis extends, and having at least one auxiliary electrode (12) for pre-ionisation, which extends parallel to the optical axis on an open side of the discharge space, characterised in that in each case the resonator (R) with its two mirrors (16, 17) and a mirror carrier (15) as well as the two main electrodes (13) with their spacers (14) and the auxiliary electrodes (12) with their carrier (11) are constructed as a self-contained component (R, E, V1, V2), in that each of these components is mounted independently and without further mutual mechanical connection of the components on a central carrier plate (T) which can be mounted in the housing (G), and in that the material for the mirror carrier (15) of the resonator component (R) has a coefficient of thermal expansion (α) close to that of the material for the central carrier plate (T).

2. Gas laser, especially a $CO_2$ laser, having a gas-tight sealed-off housing (G), a resonator (R) with two resonator mirrors (16, 17) arranged on a common axis (optical axis), two main electrodes (13) extending along the optical axis, which form between them a discharge space in which the optical axis extends, and having at least one auxiliary electrode (12) for pre-ionisation, which extends in each case parallel to the optical axis on an open side of the discharge space, characterised in that in each case the resonator (R) with its two mirrors (16, 17) and a mirror carrier (15) as well as the two main electrodes (13) with their spacers (14) and the auxiliary electrodes (12) with their carrier (11) are constructed as a self-contained component, in that the auxiliary electrodes with their carrier are mounted on the main electrode component (E), in that this main electrode component (E) and the resonator component (R) are mounted independently and without further mutual mechanical connection of the two components on a central carrier plate (T) which can be mounted in the housing (G), and in that the material for the mirror carrier (15) of the resonator component (R) has a coefficient of thermal expansion (a) close to that of the material for the central carrier plate (T).

3. Gas laser according to Claim 1 or 2, characterised in that the central carrier plate (T) consists of invar or of the metal alloy known under the name of "Vacon 70"®.

4. Gas laser according to one of Claims 1 to 3, characterised in that the mirror carrier (15) of the resonator component (R) consists of glass ceramic or ceramic.

5. Gas laser according to one of the preceding claims, characterised in that the mirror carrier (15) of the resonator component (R) consists of a rectangular open frame which is mounted with its longitudinal side walls (28, 29) in the edge regions of the central carrier plate (T).

6. Gas laser according to one of the preceding claims, characterised in that the main electrodes (13) consist of metal, for example of titanium, chromium-nickel steel or aluminium, and their spacers (14) consist of non-conductive material, for example of ceramic.

7. Gas laser according to one of the preceding claims, characterised in that the main electrode component (E) is mounted in a torsionally rigid fashion approximately in the middle of the central carrier plate (T).

8. Gas laser according to one of Claims 5 to 7, characterised in that the main electrode component (E) and the auxiliary electrode components (V1, V2) are arranged between the longitudinal side walls (28, 29) of the mirror carrier (15).

9. Gas laser according to one of the preceding claims, characterised in that the auxiliary electrodes (12) consist of metallised aluminium oxide ceramic parts, and the carrier (11) of the auxiliary electrodes (12) consists of ceramic.

10. Gas laser according to one of the preceding claims, characterised in that the materials for the individual parts of the main electrode component (E) and of the auxiliary electrode components (V1, V2) have close coefficients of thermal expansion ($\alpha$).

11. Gas laser according to one of the preceding claims, characterised in that the housing (G) consists of a box which is open at one side, can be sealed by a cover (D) and is provided on one end face with an optical window (21).

12. Gas laser according to one of the preceding claims, characterised in that the material for the housing (G) has a coefficient of thermal expansion ($\alpha$) close to that of the material for the central carrier plate (T).

13. Gas laser according to one of Claims 1 to 11, characterised in that the materials for the housing (G) and the central carrier plate (T) have different coefficients of thermal expansion ($\alpha$) and a mechanical-thermal compensation element is provided between the housing (G) and the central carrier plate (T).

14. Gas laser according to Claim 13, characterised in that the mechanical-thermal compensation element consists of a bellows.

15. Gas laser according to Claim 13, characterised in that there is provided as mechanical-thermal compensation element an adaptor of sandwich construction whose layers have a different coefficient of thermal expansion (a), which is close to the coefficient of thermal expansion (a) of the housing material or to that of the material for the central carrier plate (T).

16. Gas laser according to one of Claims 13 to 15, characterised in that the housing (G) consists of chromium-nickel steel.

**Revendications**

1. Laser à gaz, notamment laser à $CO_2$, comprenant une enceinte (G) fermée de manière étanche au gaz (sealed-off), un résonateur (R) ayant deux miroirs de résonateur (16, 17) disposés sur un axe commun (axe optique), deux électrodes principales (13) s'étendant le long de l'axe optique et qui forment entre elles une chambre de décharge dans laquelle s'étend l'axe optique, et au moins une électrode auxiliaire (12) de pré-ionisation s'étendant parallèlement à l'axe optique sur un côté ouvert de la chambre de décharge,

caractérisé en ce que le résonateur (R) avec ses deux miroirs (16, 17) et, avec un support (15) des miroirs ainsi que les deux électrodes principales (13) avec leurs entretoises (14) et les électrodes auxiliaires (12) avec leur support (11), sont constitués respectivement sous la forme de modules (R, E, V1, V2) autonomes, en ce que chacun de ces modules est fixé pour soi seul et sans autre liaison mécanique mutuelle des modules sur une platine centrale de support (T), qui peut être fixée dans l'enceinte (G), et en ce que le matériau du support (15) des miroirs, du module résonateur (R) présente un coefficient de dilatation thermique ($\alpha$) proche de celui du matériau de la platine centrale de support (T).

2. Laser à gaz, notamment laser à $CO_2$, comprenant une enceinte (G) fermée de manière étanche au gaz (sealed-off), un résonateur (R) à deux miroirs de résonateur (16, 17) montés sur un axe commun (axe optique), deux électrodes principales (13) s'étendant le long de l'axe optique et qui forment entre elles une chambre de décharge dans laquelle s'étend l'axe optique, et au moins une électrode auxiliaire (12) de pré-ionisation s'étendant parallèlement à l'axe optique sur un côté ouvert de la chambre de décharge,

caractérisé en ce que le résonateur (R) avec ses deux miroirs (16, 17) et avec un support (15) des miroirs, ainsi que les deux électrodes principales (13) avec leurs entretoises (14) et les électrodes auxiliaires (12) avec leur support (11), sont constitués respectivement sous la forme de modules autonomes, en ce que les électrodes auxiliaires avec leur support sont fixées aux modules des électrodes principales (E), en ce que ce module des électrodes principales (E) et le module résonateur (R) sont fixés pour eux seuls et sans autre liaison mécanique mutuelle des deux modules sur une platine centrale de support (T) pouvant être fixée à l'enceinte (G), et en ce que le matériau du support (15) des miroirs du module résonateur (R) présente un coefficient de dilatation thermique proche de celui du matériau de la platine centrale de support (T).

3. Laser à gaz suivant la revendication 1 ou 2, caractérisé en ce que la platine centrale de support (T) est en Invar ou en un alliage métallique connu sous le nom de "Vacon 70" (marque de fabrique).

4. Laser à gaz suivant l'une des revendications 1 à 3, caractérisé en ce que le support (15) des miroirs du module résonateur (R) est en vitrocéramique ou en céramique.

5. Laser à gaz suivant l'une des revendications précédentes, caractérisé en ce que le support (15) des miroirs du module résonateur (R) est constitué d'un cadre rectangulaire ouvert qui est fixé par ses parois formant ses grands côtés (28, 29) aux parties marginales de la platine centrale de support (T).

6. Laser à gaz suivant l'une des revendications précédentes, caractérisé en ce que les électrodes principales (13) sont en métal, par exemple en titane, en acier au chrome et au nickel ou en aluminium, et leurs entretoises (14) sont en matériau non conducteur, par exemple en céramique.

7. Laser à gaz suivant l'une des revendications précédentes, caractérisé en ce que le module des électrodes principales (E) est fixé, sans possibilité de tourner, à peu près au milieu de la platine centrale de support (T).

8. Laser à gaz suivant l'une des revendications 5 à 7, caractérisé en ce que le module des électrodes principales (E) et les modules des électrodes auxiliaires (V1, V2) sont disposés entre les parois formant les longs côtés (28, 29) du support (15) des miroirs.

9. Laser à gaz suivant l'une des revendications précédentes, caractérisé en ce que les électrodes auxiliaires (12) sont en pièces de céramique à base d'oxyde d'aluminium métallisé et le support (11) des électrodes auxiliaires (12) est en céramique.

10. Laser à gaz suivant l'une des revendications précédentes, caractérisé en ce que les matériaux des parties du module des électrodes principales (E) et des modules des électrodes auxiliaires (V1, V2) ont un coefficient de dilatation thermique ($\alpha$) voisin.

11. Laser à gaz suivant l'une des revendications précédentes, caractérisé en ce que l'enceinte (G) est constituée d'un caisson dont l'un des côtés ouvert peut être fermé par un couvercle (D) et dont l'un des côtés frontaux est muni d'une fenêtre (21) optique.

12. Laser à gaz suivant l'une des revendications précédentes, caractérisé en ce que le matériau de l'enceinte (G) présente un coefficient de dilatation thermique proche de celui du matériau de la platine centrale de support (T).

13. Laser à gaz suivant l'une des revendications 1 à 11, caractérisé en ce que les matériaux de l'enceinte (G) et de la platine centrale de support (T) présentent un coefficient de dilatation thermique ($\alpha$) différent et entre l'enceinte (G) et la platine centrale de support (T) est prévu un élément de compensation mécano-thermique.

14. Laser à gaz suivant la revendication 13, caractérisé en ce que l'élément de compensation mécano-thermique est constitué d'un soufflet à plis.

15. Laser à gaz suivant la revendication 13, caractérisé en ce qu'il est prévu, comme élément de compensation mécano-thermique, une pièce intermédiaire de structure stratifiée, dont les couches présentent un coefficient de dilatation thermique ($\alpha$) différente, qui est proche du coefficient de dilatation thermique ($\alpha$) du matériau de l'enceinte et de celui du matériau de la platine centrale de support (T).

16. Laser à gaz suivant l'une des revendications 13 à 15, caractérisé en ce que l'enceinte (G) est en acier au chrome et au nickel.